# EUROPEAN PATENT SPECIFICATION

(11) **EP 3 339 073 B1**
(45) Date of publication and mention of the grant of the patent: **03.03.2021**
(21) Application number: 17208712.4
(22) Date of filing: 20.12.2017
(51) Int. Cl.: B60K 13/04, B60K 17/34, B60K 15/063

(54) **VEHICLE BODY STRUCTURE**
FAHRZEUGKAROSSERIESTRUKTUR
CARROSSERIE DE VÉHICULE

(30) Priority: 20.12.2016 JP 2016246334
(43) Date of publication of application: 27.06.2018
(73) Proprietor: Mitsubishi Jidosha Kogyo Kabushiki Kaisha, Tokyo 108-8410 (JP); Mitsubishi Jidosha Engineering K.K., Aichi 444-8501 (JP)
(72) Inventor: YAMAMOTO, Masahiro, Tokyo, Aichi 108-8410 (JP); SANO, Takayuki, Tokyo, Aichi 108-8410 (JP); INDEN, Kazuto, Okazaki-shi, Aichi 444-8501 (JP)
(74) Representative: Vossius & Partner Patentanwälte Rechtsanwälte mbB

(56) References cited:
- EP-A1- 2 196 346
- JP-A- 2009 221 884

## Description

### Technical Field

The present invention relates to a vehicle comprising a vehicle body structure including a supply pipe of an additive for exhaust purification.

### Background Art

There has been conventionally known that a tank of an additive with a reducing action on a substance to be purified is mounted in a vehicle including an exhaust purification system that reduces and purifies an exhaust component. In a case where the substance to be purified is nitrogen oxides (NOx), an additive such as an aqueous urea solution or an aqueous ammonia solution is stored inside the tank. Further, an arrangement position of the tank has been proposed, for example, to be set under a floor of the vehicle (see Patent Document 1). With such a layout, decrease in livability in a vehicle interior due to leakage of the additive is prevented while ensuring a space therein.

EP 2 196 346 A1 describes an exhaust-gas purification device disposition structure of a vehicle.

JP 2009 221884 A describes a tank arrangement structure for a vehicle.

### Prior Art Document

### Patent Documents

Patent Document 1: Japanese Patent No. 4826612

### Summary of Invention

### Problems to Be Solved by Invention

An additive stored inside a tank is sucked by a pump in response to an operation state of an engine, and is injected into an exhaust passage through a supply pipe routed under a floor. In Patent Document 1, a layout in which a supply pipe is routed on a lower surface of a main floor panel forming a vehicle interior floor is shown. However, considering the possibility of damage or fouling by flying stones and sludge from a road surface, it is desired to route the supply pipe at a position away from the road surface as much as possible or at a position with a little exposure to the road surface. Researches on such a problem in a conventional vehicle body structure are not sufficient, and protection of the supply pipe is difficult to be improved.

In a four-wheel drive vehicle, a propeller shaft is disposed centrally in a vehicle width direction below a main floor panel. Therefore, it is difficult to adopt a routing path of a supply pipe which crosses the main floor panel from below as described in Patent Document 1. Incidentally, it is possible to avoid interference between the propeller shaft and the supply pipe if the supply pipe is routed above the main floor panel, but the supply pipe becomes routed in a vehicle interior and the protection of the supply pipe may conversely decrease.

The present application is made in light of the problems described above. One object of the application is to provide a vehicle comprising a vehicle body structure having improved protection of an additive supply pipe in an exhaust purification system. Incidentally, the application is not limited to this object, and an operational effect which is derived from configurations shown in the "Embodiments of Invention", which is described later, and which cannot be obtained by conventional techniques can also be taken as another object of the application.

### Means for Solving Problems

The vehicle body structure of the vehicle according to claim 1 includes amongst others, a drive system components connected to an engine mounted in a vehicle, and an exhaust pipe through which exhaust of the engine flows. Further, the vehicle body structure includes an injector attached to the exhaust pipe and injecting an additive used for exhaust purification, a tank for storing the additive, and a supply pipe connecting the injector and the tank.

The drive system components are disposed at a central portion of the vehicle in a vehicle width direction. The exhaust pipe is disposed side by side with the drive system components in the vehicle width direction and extends in a front-rear direction. Further, the tank is disposed on the same side as the drive system components with respect to the exhaust pipe in the vehicle width direction. Meanwhile, the supply pipe is connected to the injector from an opposite side of the drive system components across the exhaust pipe in the vehicle width direction.

Incidentally, the drive system components include a transmission, a propeller shaft (drive shaft), a transfer device, a differential device or the like.

The tank is preferably disposed below a rear floor panel of the vehicle. Further, the supply pipe preferably intersects the exhaust pipe below the rear floor panel in a bottom view. In other words, an intersection position of the supply pipe and the exhaust pipe is preferably set below the rear floor panel.

The vehicle body structure preferably further includes a fuel tank for storing fuel to be supplied to the engine. In this case, the fuel tank is preferably disposed frontward than the tank. Further, the supply pipe preferably intersects the exhaust pipe behind the fuel tank in a bottom view. In other words, the intersection position of the supply pipe and the exhaust pipe is preferably set below the rear floor panel and rearward than the fuel tank.

The supply pipe is preferably routed along a rear suspension cross in the vehicle width direction. In other words, a path of the supply pipe from the tank to the intersection position with the exhaust pipe is preferably disposed so as to extend along the rear suspension cross in the vehicle width direction.

The supply pipe is preferably routed along the side member in the front-rear direction. Incidentally, the path of the supply pipe from the tank to the intersection position with the exhaust pipe is preferably disposed so as to extend along the side member in the front-rear direction.

The vehicle body structure further includes a backbone side member which is spaced apart from the side member in the vehicle width direction and extends in the front-rear direction, and the supply pipe is preferably routed between the side member and the backbone side member in a bottom view.

The tank is preferably disposed side by side with a silencer interposed in the exhaust pipe below the rear floor panel of the vehicle.

The exhaust pipe is preferably disposed below a backbone portion that extends in the front-rear direction at a central portion of the floor panel in the vehicle width direction and bulges into a tunnel shape towards a vehicle interior.

### Effects of Invention

With the exhaust pipe as a reference, the tank is disposed on the same side as the drive system components in the vehicle width direction, and the supply pipe is connected to the injector from the opposite side thereof, and thus both of ensuring internal capacity of the tank and countermeasures against heat damage can be achieved. That is, the exhaust pipe is laid out on one side of the vehicle width direction, and the tank is disposed on the opposite side at a position where a degree of freedom of the layout is relatively high, and thus a large internal capacity can be ensured while reducing heat damage from the exhaust pipe. Also, the supply pipe connected to the injector is disposed on an opposite side of the drive system components, and thus a piping layout having high chipping resistance and impact resistance can be realized. Further, it is possible to prevent restriction on attaching postures and fixing methods of the injector when being attached to the exhaust pipe caused by peripheral components such as the drive system components.

### Brief Description of Drawings

Fig. 1 is a bottom view of a vehicle to which a vehicle body structure according to an embodiment is applied.
Fig. 2 is a cross-sectional view showing a vehicle body cut in a front-rear direction.
Fig. 3 is a perspective view around an injector.

### Embodiments of Invention

A vehicle with a vehicle body structure according to an embodiment will be described with reference to the drawings.

### 1. Configuration

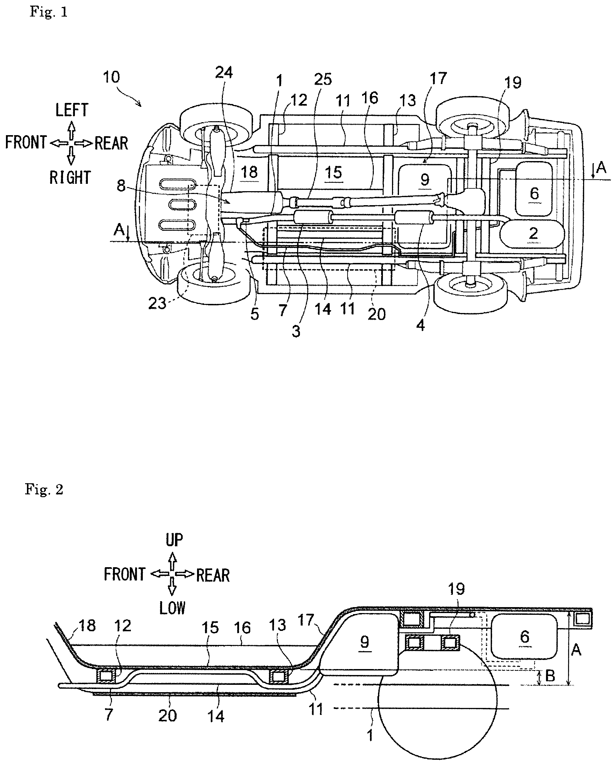

The vehicle body structure is applied to an embodiment of the vehicle 10 shown in Fig. 1. An engine 23 is disposed in an engine room positioned frontward than a vehicle interior of the vehicle 10, and various drive system components 8 are connected therebehind. The drive system components 8 include a propeller shaft 25 (drive shaft), a transfer device, a differential device or the like in addition to a transmission 24. These drive system components 8 are disposed substantially in a center of a central portion in a vehicle width direction. Incidentally, in the embodiment, a region sandwiched by left and right side members 11 is referred to as the central portion.

Further, under a floor of the vehicle 10, an exhaust pipe 1 is arranged to extend in a front-rear direction (vehicle length direction) of the vehicle 10. The exhaust pipe 1 is disposed side by side with the drive system components 8 in the vehicle width direction. In an example shown in Fig. 1, on a right side of the propeller shaft 25 which is a part of the drive system components 8, the exhaust pipe 1 is arranged to extend in the vehicle length direction with a predetermined space apart from the propeller shaft 25. Further, an arrangement position of the exhaust pipe 1 is set below a backbone portion 16 of a main floor panel 15 which longitudinally crosses a center of the vehicle width direction. The backbone portion 16 is a part of the main floor panel 15 which bulges into a tunnel shape towards a vehicle interior side.

A front end portion of the exhaust pipe 1 is connected to the engine 23, and a rear end portion thereof is connected to a silencer 2 (muffler) disposed on a rear side of the vehicle 10. A routing shape of the exhaust pipe 1 is set according to a path connecting the engine 23 and the silencer 2 in a shortest distance. Further, since the drive system components 8 are disposed substantially in the center of the central portion in the vehicle width direction, the exhaust pipe 1 is disposed at a position biased slightly to a left or right side in the central portion in the vehicle width direction. In the example shown in Fig. 1, the biased direction of the exhaust pipe 1 is the right side.

A reduction catalyst 3, a post-stage catalyst 4 or the like for purifying nitrogen oxides (NOx) contained in exhaust of the engine 23 are interposed in a path of the exhaust pipe 1. Further, an injector 5 for supplying a reducing agent is provided on an upstream side of the reduction catalyst 3. As the reducing agent, for example, an aqueous urea solution or an aqueous ammonia solution is used. An additive injected from the injector 5 performs as a reducing agent for reducing the nitrogen oxides to nitrogen in the presence of the reduction catalyst 3. An exhaust purification system of this type is widely used in automobiles and work machines, ships, power generation facilities or the like on which diesel engines or lean burn engines are mounted.

The main floor panel 15 has a substantially horizontal-plane shape. A rear floor panel 17 forming a floor surface of a rear seat or a cargo room is disposed to a rear end portion of the main floor panel 15. A dash panel 18 for partitioning the vehicle interior and the engine room is erected to a front end portion of the main floor panel 15. The rear floor panel 17 extends obliquely upward towards a rear side of the main floor panel 15 and extends in a horizontal direction thereafter, so as to form a stair shape. Meanwhile, the dash floor panel 18 extends obliquely upward from the front end portion of the main floor panel 15. Incidentally, the main floor panel 15, the dash panel 18, and the rear floor panel 17 may be formed separately or integrally (for example, by bending a single plate material). Fig. 2 shows an example in which the main floor panel 15, the dash panel 18, and the rear floor panel 17 are integrally formed.

Side members 11, a front floor cross member 12, and a rear floor cross member 13 performing as frame members of a vehicle body are attached to a lower surface side of the main floor panel 15, the rear floor panel 17, and the dash panel 18. All of the side members 11, the front floor cross member 12, and the rear floor cross member 13 are, for example, rail members having a hat-shaped cross section opened upwards, and form a closed cross section structure on lower surfaces of the main floor panel 15, the rear floor panel 17, and the dash panel 18. A pair of side members 11 is provided on left and right sides to be spaced apart in the vehicle width direction and extends in the front-rear direction of the vehicle 10. Further, the front floor cross member 12 and the rear floor cross member 13 are provided to be spaced apart in the front-rear direction and extends in the vehicle width direction. The cross members 12, 13 are disposed to connect at least the left and right side members 11. Preferably, the cross members 12, 13 pass through the side members 11 and extend to outer sides thereof. In this way, the main floor panel 15 is supported in parallel crosses, and rigidity and strength of the vehicle interior floor are ensured.

An arrangement position of the side members 11 is set to a position entering slightly inward from a left side surface and a right side surface of the vehicle 10. An arrangement position of the front floor cross member 12 is set near a boundary between the main floor panel 15 and the dash panel 18, and an arrangement position of the rear floor cross member 13 is set near a boundary between the main floor panel 15 and the rear floor panel 17. In the embodiment, as shown in Fig. 2, the cross members 12, 13 are disposed at positions which are not positions where the dash panel 18 and the rear floor panel 17 rise (inclined parts), in the front end portion and the rear end portion of the main floor panel 15.

The backbone portion 16 is formed across the entire main floor panel 15 from the front end portion to the rear end portion in a way of connecting a rising portion of the dash panel 18 and a rising portion of the rear floor panel 17 in a horizontal direction. Further, a backbone side member 14 which is spaced apart from the side member 11 in the vehicle width direction and extends in the front-rear direction is provided between the backbone portion 16 and the side member 11 in a bottom view of the vehicle 10.

The backbone side member 14 is integrally formed with the main floor panel 15 by welding and fixing a rail member having a hat-shaped cross section opened upward to the lower surface of the main floor panel 15. In the embodiment, a front end portion of the backbone side member 14 is connected to the front floor cross member 12. A rear end portion of the backbone side member 14 is connected to the rear floor cross member 13. A height dimension of the backbone side member 14 is set to a dimension that is substantially the same as a height dimension of the front floor cross member 12. In other words, a dimension from the lower surface of the main floor panel 15 to a lower surface of the backbone side member 14 is set to a dimension that is substantially the same as a dimension from the lower surface of the main floor panel 15 to a lower surface of the front floor cross member 12.

A fuel tank 9 for storing fuel of the engine 23 is disposed below the rear floor panel 17 which is behind the rear floor cross member 13, and a tank 6 of an additive is further disposed behind the fuel tank 9. Both the tank 6 and the fuel tank 9 are disposed below the rear floor panel 17 and out of the vehicle interior. As shown in Fig. 1, the side members 11 are disposed on left and right sides of the fuel tank 9, and the rear floor cross member 13 and a rear suspension cross 19 (a cross member for rear suspension) are disposed on front and rear sides of the fuel tank 9. The rear suspension cross 19 is a frame member for supporting rear suspension. The rear suspension cross 19 is disposed to connect the left and right side members 11 near rear wheels. The tank 6 for storing the additive is disposed adjacent to the silencer 2 at a rear end portion of the rear floor panel 17 of the vehicle 10 and behind the rear suspension cross 19. The tank 6 of the embodiment is disposed on a left side of the exhaust pipe 1. In other words, the tank 6 is disposed on a left side of the silencer 2 which is on one side in the vehicle width direction. The tank 6 is also disposed on the left side of the exhaust pipe 1, which is similar to that the drive system components 8 are disposed on the left side of the exhaust pipe 1. In other words, the tank 6 is disposed on the same side as the drive system components 8 with respect to the exhaust pipe 1 in the vehicle width direction.

The tank 6 and the injector 5 are communicatively connected by a supply pipe 7. As shown in Fig. 1, the supply pipe 7 is routed under the rear floor panel 17 and to intersect the exhaust pipe 1 in a bottom view. An intersection position of the exhaust pipe 1 and the supply pipe 7 is a position below the rear floor panel 17 and a position behind the fuel tank 9. Further, the supply pipe 7 is routed under the main floor panel 15 and to extend in the front-rear direction on a right side (the other side in the vehicle width direction) of the exhaust pipe 1. That is, the exhaust pipe 1 and the supply pipe 7 form a layout of intersecting each other in the bottom view of the vehicle 10, and the intersection is set below the rear floor panel 17. Incidentally, a margin dimension A (clearance dimension in a height direction) between the exhaust pipe 1 and the rear floor panel 17 is larger than a margin dimension B between the exhaust pipe 1 and the main floor panel 15 (A > B).

At the intersection of the supply pipe 7 and the exhaust pipe 1, the supply pipe 7 is routed along the rear suspension cross 19 in the vehicle width direction. For example, as shown in Fig. 1, the supply pipe 7 is disposed along a rear side surface of the rear suspension cross 19 or a lower surface of the rear floor panel 17 adjacent thereto, and is fixed via a fastener. In other words, a path of the supply pipe 7 from the tank 6 to the intersection position with the exhaust pipe 1 is disposed along the rear suspension cross 19 in the vehicle width direction. Since the vehicle body around the rear suspension cross 19 has high rigidity, the supply pipe 7 is routed to a structurally robust part, so that protection of the supply pipe 7 is improved. Further, since the supply pipe 7 is hidden behind the rear suspension cross 19, chipping resistance of the supply pipe 7 is also improved.

On an upstream side (an injector 5 side) of the intersection with the exhaust pipe 1, the supply pipe 7 is routed along the side member 11 or the backbone side member 14 which has high rigidity. In other words, a path of the supply pipe 7 from the intersection position with the exhaust pipe 1 to the injector 5 is disposed along the side member 11 or the backbone side member 14 in the front-rear direction. In this way, the protection of the supply pipe 7 is improved. In the embodiment, the supply pipe 7 is routed between the side member 11 and the backbone side member 14. In this way, left and right sides of the supply pipe 7 are covered by the side members 11, 14, and the protection of the supply pipe 7 is further improved. Further, as shown in Fig. 1, since a routing position of the supply pipe 7 is set on a side of the vehicle 10 inner than the side member 11, chipping wear or deformation by flying stones from the road surface, and fouling by muddy water are suppressed more effectively, and the protection of the supply pipe 7 is further improved.

As indicated by a broken line in Fig. 1, in a rectangular area surrounded by the side member 11, the front floor cross member 12, the rear floor cross member 13, and the backbone side member 14 in a bottom view, an undercover 20 covering a lower surface side of the supply pipe 7 in a planar shape is attached. Peripheral portions of the undercover 20 are fixed with respect to the side member 11, the front floor cross member 12, the rear floor cross member 13, the backbone side member 14 or the like. In this way, the chipping wear or deformation by flying stones from the road surface, and the fouling by muddy water are suppressed more effectively, and the protection of the supply pipe 7 is improved.

A shape of the supply pipe 7 at a joint with the injector 5 is formed into a U shape towards the injector 5 from the right side of the exhaust pipe 1 which is an outer side in the vehicle width direction. Further, the injector 5 is disposed at a position (offset place) where the exhaust pipe 1 is bent into a crank shape. The supply pipe 7 is connected to the injector 5 from the right side of the exhaust pipe 1. In other words, the supply pipe 7 is connected to the injector 5 so as to oppose the drive system components 8 from an opposite side of the drive system components 8 across the exhaust pipe 1 in the vehicle width direction. The injector 5 is inserted at a position in the exhaust pipe 1 which overlaps with a region of the drive system components in the front-rear direction, viewed in the vehicle width direction.

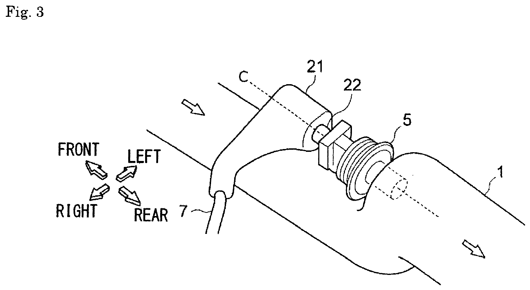

A connection position of the supply pipe 7 and the injector 5 is shown in Fig. 3. A quick connector 21 for detachably connecting the supply pipe 7 and the injector 5 is attached to a front end portion of the supply pipe 7. A cylindrical joint portion 22 is provided on a front end of the quick connector 21. The joint portion 22 is connected to an end portion of the injector 5. A white arrow in Fig. 3 indicates a flow direction of exhaust, and a reference symbol C indicates a central axis of the joint portion 22. An extending direction of the center axis C corresponds to a connecting direction of the supply pipe 7 with respect to the injector 5.

The connecting direction of the supply pipe 7 with respect to the injector 5 is set to a direction that coincides with a central axis of an injection direction of the additive injected from the injector 5 into the exhaust pipe 1. That is, an inflow direction of the additive flowing from the supply pipe 7 to the injector 5 is set to be the same with the injection direction of the additive injected from the injector 5. In this way, an excessive force is hardly exerted on an O-ring interposed in a gap between the joint portion 22 and the injector 5, so that wear and deformation of the O-ring are suppressed and meanwhile a connection thereof is stabilized.

### 2. Operational Effect

In the vehicle body structure described above, with the exhaust pipe 1 as a reference, the tank 6 is disposed on the same side as the drive system components 8 in the vehicle width direction, and the supply pipe 7 is connected to the injector 5 from an opposite side thereof. In this way, the exhaust pipe 1 is laid out on one side in the vehicle width direction, and thus a degree of freedom of a layout on the opposite side can be increased. Further, since the tank 6 is disposed at a position where the degree of freedom of the layout is relatively high, a large internal capacity can be ensured while reducing heat damage from the exhaust pipe 1. Further, since the supply pipe 7 connected to the injector 5 is disposed on an opposite side of the drive system components 8, it is possible to realize a piping layout having high chipping resistance and impact resistance while utilizing vehicle frame members (the right side members 11 in a case where the exhaust pipe 1 is disposed to be offset to the right side of the drive system components 8 in the bottom view of the vehicle 10, as shown in Fig. 1) on a side where the exhaust pipe 1 is offset. Therefore, the protection of the supply pipe 7 can be improved. Further, it is possible to prevent constraints on attaching postures and fixing methods of the injector 5 when being attached to the exhaust pipe 1 caused by peripheral components such as the drive system components 8.

In the vehicle body structure described above, the exhaust pipe 1 and the supply pipe 7 intersect below the rear floor panel 17. In this way, the supply pipe 7 is laid out to cross the exhaust pipe 1 at a position where the margin dimension is large, and thus a bad influence of exhaust heat on the supply pipe 7 can be reduced. For example, temperature rise of the additive and thermal deformation of the supply pipe 7 can be suppressed. Accordingly, the protection of the supply pipe 7 and the additive can be improved, and maintainability of the exhaust purification system can be enhanced. Specifically, since the margin dimension A between the rear floor panel 17 and the exhaust pipe 1 is larger than the margin dimension B between the main floor panel 15 and the exhaust pipe 1, influence of heat on the supply pipe 7 can be reduced. Therefore, not only the protection of the supply pipe 7 can be enhanced, but also protection of the exhaust purification system can be improved.

Incidentally, in the vehicle 10 of four-wheel drive or FR type (front engine/rear drive type), a propeller shaft 25, a transfer device or the like are disposed below the backbone portion 16, and it may be difficult to adopt a routing path of the supply pipe 7 crossing the propeller shaft 25, the transfer device or the like in some cases. Meanwhile, according to the vehicle body structure described above, the injector 5 positioned frontward than the front floor cross member 12 and the tank 6 can be communicatively connected without causing the supply pipe 7 to cross the propeller shaft 25.

In the vehicle body structure described above, since the tank 6 of the additive and the fuel tank 9 are disposed side by side in the front-rear direction, the size in the vehicle width direction is less restricted, and each content capacity can be ensured. Further, the tank 6 disposed on the rear side of the vehicle 10 can perform as a protection device for protecting a rear surface side of the fuel tank 9 disposed in front of the tank 6. For example, the tank 6 has a function of preventing load input from the rear direction of the vehicle 10 from being directly transmitted to the fuel tank 9. In this way, protection of the supply pipe 9 can be improved. Incidentally, the additive stored in the tank 6 is remarkably less flammable compared with the fuel of the engine 23. Therefore, safety of the vehicle 10 against the rear impact can be improved by disposing the tank 6 on a rear side of the fuel tank 9.

Further, in the vehicle body structure described above, the supply pipe 7 is set to a layout of crossing the exhaust pipe 1 behind the fuel tank 9. Meanwhile, in a case where an amount of fuel remaining in the fuel tank 9 is sufficiently large, an amount of change in an ambient temperature of the exhaust pipe 1 becomes small due to large heat capacity of the fuel. That is, in a hybrid automobile in which operation and stop of the engine 23 is repeated, an ambient temperature of the exhaust pipe 1 on a downstream side of the fuel tank 9 is less likely to vary compared with that on an upstream side of the fuel tank 9, and has a tendency to be maintained at a relatively low temperature. Such temperature characteristics is utilized and the supply pipe 7 is set to the layout of crossing the exhaust pipe 1 at a position of being easily maintained at a relatively low temperature, and thus the protection of the supply pipe 7 can be further improved.

In the vehicle body structure described above, the supply pipe 7 is routed along the rear suspension cross 19 in the vehicle width direction. In this way, fixing strength of the supply pipe 7 can be ensured, and the protection of the supply pipe 7 can be improved. Further, since the rear suspension cross 19 is provided at a relatively high position on a floor surface, a distance between the supply pipe 7 and the exhaust pipe 1 can be increased. In this way, the influence of heat on the supply pipe 7 can be reduced, and the protection of the supply pipe 7 can be improved. Further, since the supply pipe 7 is hidden behind the rear suspension cross 19, the chipping resistance of the supply pipe 7 can be improved.

Since the supply pipe 7 is routed along the side member 11 or the backbone side member 14 in the front-rear direction, the fixing strength of the supply pipe 7 can be ensured, and the protection of the supply pipe 7 can be improved. Further, since the supply pipe 7 is disposed on a side of the vehicle 10 inner than the side member 11, the chipping wear or deformation, and the fouling by the muddy water can be suppressed. Incidentally, since the backbone side member 14 is disposed between the supply pipe 7 and the exhaust pipe 1, transmission of exhaust heat to the supply pipe 7 can be shielded by the backbone side member 14. Therefore, the protection of the supply pipe 7 and the additive can be further improved.

The supply pipe 7 is routed between two side members 11, 14, and thus the left and right sides of the supply pipe 7 can be covered by the side members 11, 14. In this way, the chipping wear or deformation, and the fouling by the muddy water of the supply pipe 7 can be suppressed, and the protection of the supply pipe 7 can be further improved. Further, since the lower surface side of the supply pipe 7 is covered by the undercover 20, the protection of the supply pipe 7 can be further improved.

The tank 6 is disposed side by side with the silencer 2, and thus space utilization efficiency below the rear floor panel 17 can be increased, and space saving of the vehicle 10 can be achieved. In particular, freezing of the additive stored in the tank 6 can be suppressed in an extremely cold state, and breakage of the supply pipe 7 and the injector 5 can be prevented. Therefore, the protection of the supply pipe 7 and the additive can be further improved.

Since the exhaust pipe 1 is disposed below the backbone portion 16, heat of the exhaust pipe 1 can be moved to the rear side of the backbone portion 16, and the influence of exhaust heat on the supply pipe 7 can be reduced. Therefore, the protection of the supply pipe 7 can be further improved.

Incidentally, in the vehicle body structure described above, the injector 5 is disposed at a position where the exhaust pipe 1 is bent into the crank shape, and the path of the supply pipe 7 is formed to be curved into a U shape towards the injector 5. In this way, the inflow direction of the additive flowing from the supply pipe 7 to the injector 5 can coincide with the injection direction of the additive injected from the injector 5. Therefore, the connection between the supply pipe 7 and the injector 5 can be stabilized, and the protection of the supply pipe 7 can be further improved.

### 3. Modification

Although in the above embodiment, a reduction system for purifying NOx in exhaust has been described in detail, types of an additive flowing inside the supply pipe 7 is not limited to urea water. In an exhaust purification system using the NOx selective reduction catalyst 3, ammonia water is used instead of the urea water in some cases. Further, in an exhaust purification system using a DPF (diesel particulate filter), hydrocarbon (HC, unburned fuel) is injected into the exhaust pipe 1 in some cases in order to accelerate combustion of PMs (particulate matters). Therefore, it is also possible to apply the vehicle body structure described above to an exhaust purification system supplying the ammonia water or hydrocarbon instead of the urea water.

### Description of Reference Numerals

- 1: exhaust pipe
- 2: silencer
- 3: reduction catalyst
- 4: rear-stage catalyst
- 5: injector
- 6: tank
- 7: supply pipe
- 8: drive system component
- 9: fuel tank
- 10: vehicle
- 11: side member
- 12: front floor cross member
- 13: rear floor cross member
- 14: backbone side member
- 15: main floor panel
- 16: backbone portion
- 17: rear floor panel
- 18: dash panel
- 19: rear suspension cross
- 20: undercover
- 21: quick connector
- 22: joint portion
- 23: engine
- 24: transmission
- 25: propeller shaft

## Claims

1. A vehicle (10) comprising a vehicle body structure, the vehicle body structure comprising:
a drive system component (8) connected to an engine (23) mounted in the vehicle (10);
an exhaust pipe (1) through which exhaust of the engine (23) flows;
an injector (5) which is attached to the exhaust pipe (1) and injects an additive used for exhaust purification;
a tank (6) for storing the additive; and
a supply pipe (7) connecting the injector (5) and the tank (6),
wherein the drive system component (8) is disposed at a central portion of the vehicle (10) in a vehicle width direction,
wherein the exhaust pipe (1) is disposed side by side with the drive system component (8) in the vehicle width direction and extends in a front-rear direction,
wherein the tank (6) is disposed on the same side as the drive system component (8) with respect to the exhaust pipe (1) in the vehicle width direction,
wherein the exhaust pipe (1) and the supply pipe (7) form a layout of intersecting each other; and
wherein the supply pipe (7) is connected to the injector (5) from an opposite side of the drive system component (8) across the exhaust pipe (1) in the vehicle width direction.

2. The vehicle (10) according to claim 1,
wherein the tank (10) is disposed below a rear floor panel (17) of the vehicle (10), and
wherein the supply pipe (7) intersects the exhaust pipe (1) below the rear floor panel (17) in a bottom view.

3. The vehicle (10) according to claim 1 or 2,
wherein the vehicle body structure further comprises a fuel tank (9) for storing fuel to be supplied to the engine (23),
wherein the fuel tank (9) is disposed frontward than the tank (6), and
wherein the supply pipe (7) intersects the exhaust pipe (1) rearward than the fuel tank (9) in a bottom view.

4. The vehicle (10) according to any of claims 1 to 3,
wherein the supply pipe (7) is routed along a rear suspension cross (19) in the vehicle width direction.

5. The vehicle (10) according to any of claims 1 to 4,
wherein the supply pipe (7)n is routed along a side member (11) in the front-rear direction.

6. The vehicle (10) according to claim 5,
wherein the vehicle body structure further comprises a backbone side member (14) which is spaced apart from the side member (11) in the vehicle width direction and extends in the front-rear direction, and
wherein the supply pipe (7) is routed between the side member (11) and the backbone side member (14) in a bottom view.

7. The vehicle (10) according to any of claims 1 to 6,
wherein the tank (6) is disposed side by side with a silencer (2) interposed in the exhaust pipe (1) below the rear floor panel (17) of the vehicle (10).

8. The vehicle (10) according to any of claims 1 to 7,
wherein the exhaust pipe (1) is disposed below a backbone portion (16) which extends in the front-rear direction at a central portion of a floor panel in the vehicle width direction and bulges into a tunnel shape towards a vehicle interior.

## Patentansprüche

1. Fahrzeug (10), welches eine Fahrzeugkarosseriestruktur aufweist, wobei die Fahrzeugkarosseriestruktur aufweist:
ein Antriebssystembauteil (8), das mit einem in dem Fahrzeug (10) montierten Motor (23) verbunden ist;
ein Abgasrohr (1), durch das Abgas des Motors (23) strömt;
einen Injektor (5), der an dem Abgasrohr (1) angebracht ist und einen zur Abgasreinigung verwendeten Zusatzstoff einspritzt;
einen Tank (6) zum Speichern des Zusatzstoffs; und
ein Zufuhrrohr (7), das den Injektor (5) und den Tank (6) verbindet;
wobei das Antriebssystembauteil (8) an einem in einer Fahrzeugbreitenrichtung mittleren Abschnitt des Fahrzeugs (10) angeordnet ist,
wobei das Abgasrohr (1) in der Fahrzeugbreitenrichtung Seite an Seite mit dem Antriebssystembauteil (8) angeordnet ist und sich in einer Vorn-Hinten-Richtung erstreckt,
wobei der Tank (6) in Bezug auf das Abgasrohr (1) in der Fahrzeugbreitenrichtung auf derselben Seite angeordnet ist wie das Antriebssystembauteil (8),
wobei das Abgasrohr (1) und das Zufuhrrohr (7) eine räumliche Anordnung bilden, bei der sie einander schneiden; und
wobei das Zufuhrrohr (7) mit dem Injektor (5) von einer in der Fahrzeugbreitenrichtung gegenüberliegenden Seite des Antriebssystembauteils (8) quer zum Abgasrohr (1) verbunden ist.

2. Fahrzeug (10) nach Anspruch 1,
wobei der Tank (6) unterhalb einer hinteren Bodenplatte (17) des Fahrzeugs (10) angeordnet ist, und
wobei das Zufuhrrohr (7) das Abgasrohr (1) in einer Ansicht von unten unterhalb der hinteren Bodenplatte (17) schneidet.

3. Fahrzeug (10) nach Anspruch 1 oder 2,
wobei die Fahrzeugkarosseriestruktur ferner einen Kraftstofftank (9) zur Bevorratung von Kraftstoff aufweist, der an den Motor (23) zugeführt werden soll,
wobei der Kraftstofftank (9) vor dem Tank (6) angeordnet ist, und
wobei das Zufuhrrohr (7) das Abgasrohr (1) in einer Ansicht von unten weiter hinten als der Kraftstofftank (9) schneidet.

4. Fahrzeug (10) nach einem der Ansprüche 1 bis 3,
wobei das Zufuhrrohr (7) entlang eines hinteren Aufhängungsquerträgers (19) in der Fahrzeugbreitenrichtung geführt ist.

5. Fahrzeug (10) nach einem der Ansprüche 1 bis 4,
wobei das Zufuhrrohr (7) entlang eines Seitenelements (11) in der Vorn-Hinten-Richtung geführt ist.

6. Fahrzeug (10) nach Anspruch 5,
wobei die Fahrzeugkarosseriestruktur ferner ein Grundgerüst-Seitenelement (14) aufweist, das in der Fahrzeugbreitenrichtung von dem Seitenelement (11) beabstandet ist und sich in der Vorn-Hinten-Richtung erstreckt, und
wobei das Zufuhrrohr (7) in einer Ansicht von unten zwischen dem Seitenelement (11) und dem Grundgerüst-Seitenelement (14) geführt ist.

7. Fahrzeug (10) nach einem der Ansprüche 1 bis 6,
wobei der Tank (6) Seite an Seite mit einem in dem Abgasrohr (1) eingefügten Schalldämpfer (2) unterhalb der hinteren Bodenplatte (17) des Fahrzeugs (10) angeordnet ist.

8. Fahrzeug (10) nach einem der Ansprüche 1 bis 7,
wobei das Abgasrohr (1) unterhalb eines Grundgerüstabschnitts (16) angeordnet ist, der sich in der Vorn-Hinten-Richtung an einem mittleren Abschnitt einer Bodenplatte in der Fahrzeugbreitenrichtung erstreckt und sich in Tunnelform in Richtung eines Fahrzeuginneren wölbt.

## Revendications

1. Véhicule (10) comprenant une structure de corps de véhicule, la structure de corps de véhicule comprenant :
un composant de système d'entraînement (8) raccordé à un moteur (23) monté dans le véhicule (10) ;
un tuyau d'échappement (1) à travers lequel l'échappement du moteur (23) s'écoule ;
un injecteur (5) qui est fixé au tuyau d'échappement (1) et injecte un additif utilisé pour la purification de l'échappement ;
un réservoir (6) pour stocker l'additif ; et
un tuyau d'alimentation (7) raccordant l'injecteur (5) et le réservoir (6),
dans lequel le composant de système d'entraînement (8) est disposé au niveau d'une partie centrale du véhicule (10) dans le sens de la largeur du véhicule,
dans lequel le tuyau d'échappement (1) est disposé côte à côte avec le composant de système d'entraînement (8) dans le sens de la largeur du véhicule et s'étend dans une direction avant - arrière,
dans lequel le réservoir (6) est disposé du même côté que le composant de système d'entraînement (8) par rapport au tuyau d'échappement (1) dans le sens de la largeur du véhicule,
dans lequel le tuyau d'échappement (1) et le tuyau d'alimentation (7) forment un agencement d'intersection entre eux ; et
dans lequel le tuyau d'alimentation (7) est raccordé à l'injecteur (5) à partir d'un côté opposé du composant de système d'entraînement (8) de part et d'autre du tuyau d'échappement (1) dans le sens de la largeur du véhicule.

2. Véhicule (10) selon la revendication 1,
dans lequel le réservoir (6) est disposé au-dessous d'un panneau de plancher arrière (17) du véhicule (10), et
dans lequel le tuyau d'alimentation (7) coupe le tuyau d'échappement (1) au-dessous du panneau de plancher arrière (17) dans une vue de dessous.

3. Véhicule (10) selon la revendication 1 ou 2, dans lequel la structure de corps de véhicule comprend en outre un réservoir de carburant (9) pour stocker le carburant à fournir au moteur (23),
dans lequel le réservoir de carburant (9) est disposé davantage vers l'avant que le réservoir (6), et
dans lequel le tuyau d'alimentation (7) coupe le tuyau d'échappement (1) davantage vers l'arrière que le réservoir de carburant (9) sur une vue de dessous.

4. Véhicule (10) selon l'une quelconque des revendications 1 à 3,
dans lequel le tuyau d'alimentation (7) est acheminé le long d'une traverse de suspension arrière (19) dans le sens de la largeur du véhicule.

5. Véhicule (10) selon l'une quelconque des revendications 1 à 4,
dans lequel le tuyau d'alimentation (7) est acheminé le long d'un élément latéral (11) dans la direction avant - arrière.

6. Véhicule (10) selon la revendication 5,
dans lequel la structure de corps de véhicule comprend en outre un élément latéral d'ossature centrale (14) qui est espacé de l'élément latéral (11) dans le sens de la largeur du véhicule et s'étend dans la direction avant - arrière, et
dans lequel le tuyau d'alimentation (7) est acheminé entre l'élément latéral (11) et l'élément latéral d'ossature centrale (14) sur une vue de dessous.

7. Véhicule (10) selon l'une quelconque des revendications 1 à 6,
dans lequel le réservoir (6) est disposé côte à côte avec un silencieux (2) intercalé dans le tuyau d'échappement (1) au-dessous du panneau de plancher arrière (17) du véhicule (10).

8. Véhicule (10) selon l'une quelconque des revendications 1 à 7,
dans lequel le tuyau d'échappement (1) est disposé au-dessous d'une partie d'ossature centrale (16) qui s'étend dans la direction avant - arrière au niveau d'une partie centrale d'un panneau de plancher dans le sens de la largeur du véhicule et se renfle en une forme de tunnel vers l'intérieur du véhicule.
